# EUROPÄISCHE PATENTSCHRIFT

(11) **EP 1 563 349 B1**
(45) Veröffentlichungstag und Bekanntmachung des Hinweises auf die Patenterteilung: **12.04.2006**
(21) Anmeldenummer: 02785336.5
(22) Anmeldetag: 30.10.2002
(51) Int. Cl.: G05B 19/042

(54) **VERFHAREN ZUM BETREIBEN EINES ELEKTRONISCHEN STEUERGERÄTS**
METHOD FOR OPERATING AN ELECTRONIC CONTROL UNIT
PROCEDE D'EXPLOITATION D'UN DISPOSITIF DE COMMANDE ELECTRONIQUE

(43) Veröffentlichungstag der Anmeldung: 17.08.2005
(73) Patentinhaber: Automotive Lighting Reutlingen GmbH, 72762 Reutlingen (DE)
(72) Erfinder: SEIF, Lothar, 89100 NAILLY (FR); KIENZLER, Thomas, 72762 Reutlingen (DE)
(74) Vertreter: Wörz, Volker Alfred
(86) Internationale Anmeldenummer: PCT/EP2002/012109
(87) Internationale Veröffentlichungsnummer: WO 2004/040383

(56) Entgegenhaltungen:
- EP-A- 0 591 628
- EP-A- 0 762 246

## Beschreibung

### Stand der Technik

Die vorliegende Erfindung betrifft ein Verfahren zum Betreiben eines elektronischen Steuergeräts mit mindestens einem Signaleingang und mehreren Ausgängen zur Ansteuerung externer Komponenten.

Die vorliegende Erfindung betrifft außerdem ein elektronisches Steuergerät sowie ein Computerprogramm für ein elektronisches Steuergerät, das auf einem Rechengerät, insbesondere auf einem Mikroprozessor des Steuergeräts, ablauffähig ist.

Aus der EP 0 762 246 A1 ist ein Verfahren und eine Vorrichtung zur Überprüfung einer Steuereinheit bekannt, die einen Mikroprozessor und wenigstens zwei Ausgänge und wenigstens zwei Eingänge aufweist. Der Mikroprozessor beaufschlagt wenigstens einen Ausgang mit einem Prüfsignal. Durch ein Prüfgerät wird jedem Ausgang genau ein Eingang oder jedem Eingang genau ein Ausgang zugeordnet. Der Mikroprozessor liest über wenigstens einen Eingang ein Prüfsignal und erkennt auf Grundlage des eingelesenen Signale Fehler der Steuereinheit.

Der Erfindung liegt die Aufgabe zugrunde, ein verbessertes Betriebsverfahren und Computerprogramm für elektronische Steuergeräte bereitzustellen und damit flexibler einsetzbare Steuergeräte zu schaffen.

Ausgehend von einem Betriebsverfahren der eingangs genannten Art wird diese Aufgabe erfindungsgemäß dadurch gelöst, dass ein Ausgang der Ausgänge mit dem Signaleingang verbunden wird, und dass jedem der Ausgänge ein Wert eines Betriebsparameters des Steuergeräts zugeordnet wird. Die Verbindung des Ausgangs mit dem Signaleingang kann bei der Fertigung des Steuergeräts erfolgen oder auch nachdem das Steuergerät bereits in Betrieb genommen worden ist. Es ist dazu vorteilhaft, einen oder mehrere der Ausgänge und den Signaleingang aus dem Gehäuse des Steuergeräts auf einen externen Stecker herauszuführen. Durch die Auswahl, welcher der Ausgänge mit dem Signaleingang verbunden wird, erfolgt quasi eine Codierung, die bei Betrieb des Steuergeräts ausgewertet werden kann.

Der große Vorteil des erfindungsgemäßen Verfahrens kommt bei der Massenproduktion von Steuergeräten zum tragen, die bis auf einen, bspw. erst später zu applizierenden, Parameter absolut identische Computerprogramme zur Steuerung aufweisen. Die extern herstellbare Verbindung ermöglicht die Produktion von Steuergeräten mit identischen Computerprogrammen und eine erst nach der Produktion durchführbare Individualisierung durch Wahl des Wertes des Betriebsparameters, z.B. unter Verwendung eines speziellen Codiersteckers.

In einer besonders vorteilhaften Ausführungsform der Erfindung werden in einem Testschritt die Ausgänge mit einem Testsignal beaufschlagt, und ein am Signaleingang anliegendes Signal wird erfasst. Dadurch ist es möglich, bei Betrieb des Steuergeräts festzustellen, welcher der Ausgänge mit dem Signaleingang verbunden ist.

Eine weitere Ausführungsform der Erfindung sieht vor, dass sobald während des Testschritts am Signaleingang ein mit dem Testsignal übereinstimmendes Eingangssignal erfasst wird, auf die Verbindung des Signaleingangs mit dem momentan mit dem Testsignal beaufschlagten Ausgang und damit auf den dem Ausgang zugeordneten Wert des Betriebsparameters des Steuergeräts geschlossen wird, wodurch eine Decodierung des Werts des Betriebsparameters erfolgt. Ganz besonders vorteilhaft ist es, die Ausgänge in dem Testschritt einzeln und zeitlich nacheinander mit dem Testsignal zu beaufschlagen.

Je nach Einbausituation und auftretender elektromagnetischer Störstrahlung ist bei dem Vergleich des Testsignals mit dem Eingangssignal ein gewisses Toleranzband anzusetzten, innerhalb dessen auf eine Übereinstimmung der Signale geschlossen wird. Dadurch wird den insbesondere bei größeren Leitungslängen speziell in Kraftfahrzeugen oder industriellen Anlagen auftretenden Einstreuungen in elektrische Leitungen Rechnung getragen.

Äußerst vorteilhaft ist eine Variante des erfindungsgemäßen Verfahrens, bei der Funktionen des Steuergeräts in Abhängigkeit von dem Wert des Betriebsparameters ausgeführt werden. Damit kann beispielsweise eine spezielle Betriebsart des Steuergeräts ausgewählt werden. Diese Variante eröffnet auch die Möglichkeit, einen zum Zeitpunkt der Herstellung des Steuergeräts noch unbekannten Wert des Betriebsparameters des Steuergeräts nachträglich auszuwählen und dem Steuergerät zur Verfügung zu stellen.

Da die Ausgänge des Steuergeräts üblicherweise mit externen Komponenten wie z.B. bei einem Kraftfahrzeug mit Schrittmotoren eines Systems zur Leuchtweitenregulierung oder auch elektronischen Treiberstufen für Magnetventile oder dergleichen verbunden und zur Ansteuerung dieser Komponenten bestimmt sind, ist eine weitere vorteilhafte Ausführungsform der vorliegenden Erfindung dadurch gekennzeichnet, dass der Betrieb der externen Komponenten durch das Testsignal nicht beeinträchtigt wird. Ggf. sind hierzu spezielle Zeitverläufe des Testsignals erforderlich, um eine versehentliche Ansteuerung der externen Komponenten zu vermeiden.

In einer weiteren Variante der Erfindung sind die genannten Verfahrensschritte als Computerprogramm für das elektronische Steuergerät realisiert, wobei das Computerprogramm auf einem elektrischen Speichermedium, insbesondere auf einem Flash-Memory oder einem Read-Only-Memory abgespeichert ist.

Eine weitere Lösung der Aufgabe der vorliegenden Erfindung besteht in einem elektronischen Steuergerät, das zur Ausführung eines Verfahrens nach einem der Ansprüche 1 - 6 geeignet ist.

In einer weiteren Variante der Erfindung ist das Steuergerät zur Steuerung von Komponenten eines Kraftfahrzeugs, insbesondere eines Scheinwerfersystems, vorgesehen. An solche Steuergeräte für Scheinwerfersysteme sind oftmals Stelleinrichtungen wie z.B. Schrittmotoren angeschlossen, wobei die Ausgänge zur Ansteuerung der Schrittmotoren besonders gut zur Verwendung bei dem erfindungsgemäßen Verfahren geeignet sind.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt schematisch eine erste Ausführungsform eines erfindungsgemäßen Steuergeräts, und
- Figur 2: zeigt einen Programmablaufplan, der die Schritte einer Ausführungsform des erfindungsgemäßen Betriebsverfahrens beinhaltet.

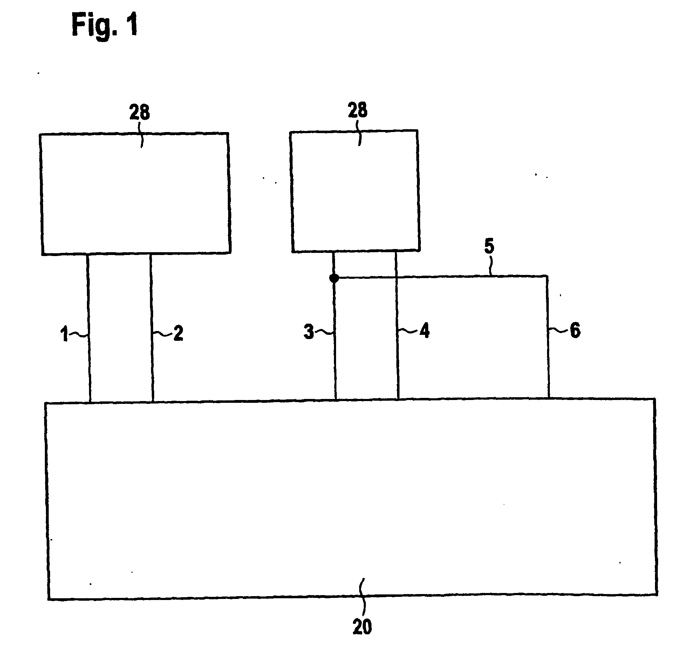

Das in Fig. 1 dargestellte elektronische Steuergerät 20 dient zur Steuerung eines Scheinwerfersystems eines Kraftfahrzeugs. Das Steuergerät 20 weist dazu eine Mehrzahl von N=4 Ausgängen 1, 2, 3, 4 auf.

Die Ausgänge 1 bis 4 dienen zur Ansteuerung der Schrittmotoren 28, mit denen die Strahlrichtung von in dem Scheinwerfersystem befindlichen Scheinwerfern in einer zur Fahrbahn parallelen Ebene eingestellt werden kann, um eine sog. Kurvenlicht-Funktion zu realisieren. Das Kurvenlicht sieht eine Einstellung der Strahlrichtung in Abhängigkeit des Radius einer durchfahrenen Kurve vor, um insbesondere enge Kurven besser ausleuchten zu können.

Wie eingangs bereits erwähnt, dienen die Schrittmotoren 28 zur Einstellung der Strahlrichtung. Die Schrittmotoren 28 haben kein Mittel zur Positionsrückmeldung, so dass eine Regelung der Strahlrichtung nicht möglich ist. Um trotzdem eine definierte Strahlrichtung einstellen zu können, besitzt jeder Schrittmotor 28 eine Referenzposition, der eine definierte Strahlrichtung zugeordnet ist.

Je nach Fahrzeugtyp entspricht die Referenzposition beispielsweise einer Abweichung um 8° von der Längsachse des Kraftfahrzeugs oder auch von 0°. Eine Referenzposition von 0° bedeutet dabei, dass die Strahlrichtung eines in dieser Referenzposition befindlichen Scheinwerfers parallel mit der Längsachse des Kraftfahrzeugs ist.

Da alle anderen möglichen Positionen des Schrittmotors 28 in Abhängigkeit von der vor Fahrtbeginn einmal ermittelten Referenzposition abhängen, ist auch die sog. Sicherheitsposition eine Scheinwerfers, in der die Strahlrichtung mit der Fahrzeuglängsachse übereinstimmt, von der Referenzposition abhängig. Die Sicherheitsposition kann als Winkelabweichung von der Referenzposition dargestellt werden und muss in dem Steuergerät 20 bekannt sein, um die Strahlrichtung der Scheinwerfer im Notfall in diese Sicherheitsposition stellen zu können.

Um nicht für jedes Steuergerät eines Fahrzeugtyps mit abweichender Sicherheitsposition ein typspezifisches Computerprogramm erstellen zu müssen, wird die Sicherheitsposition erfindungsgemäß durch das im Folgenden näher beschrieben Verfahren codiert.

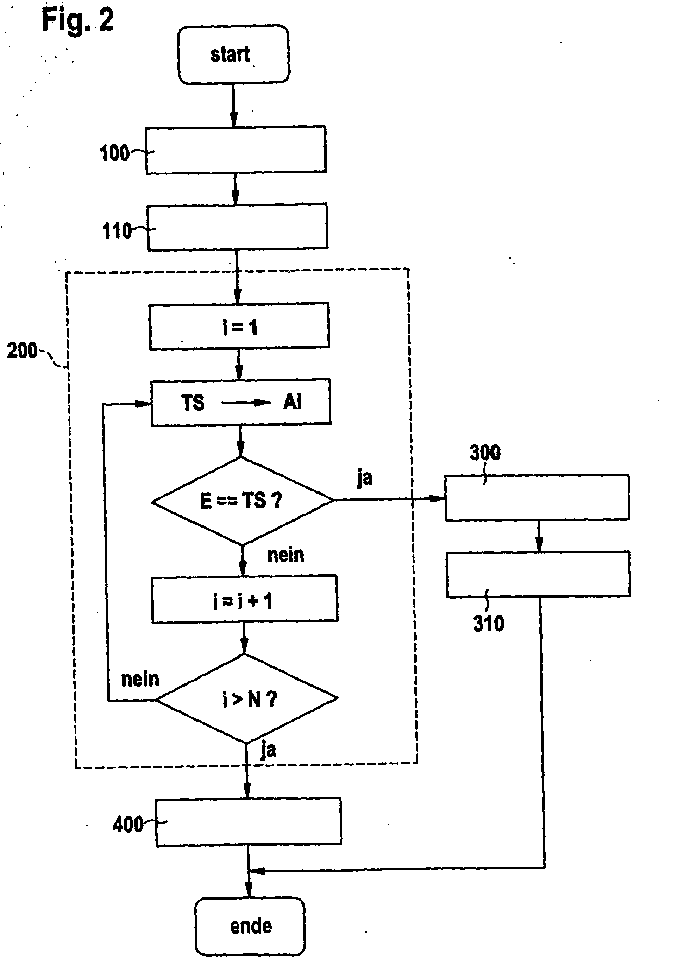

Figur 2 zeigt einen Programmablaufplan, wobei in einem ersten Schritt 100 der Ausgang 3 des Steuergeräts 20 mit dem Signaleingang 6 verbunden wird. Prinzipiell kann ein belibiger Ausgang verwendet werden, auch wenn er mit einer externen Komponente 28, in diesem Fall mit einem Schrittmotor, verbunden und zu deren Ansteuerung bestimmt ist. Der Signaleingang 6 darf nicht anderweitig genutzt oder mit zusätzlichen externen Komponenten verbunden werden.

Die Verbindung 5 zwischen Ausgang 3 und Signaleingang 6 ist in Figur 1 dargestellt und kann bei der Produktion des Steuergeräts 20, vorteilhafterweise aber auch noch danach hergestellt werden. Dazu kann der Signaleingang 6 auf einen Stecker des Steuergeräts 20 herausgeführt werden, so dass die Verbindung mit dem ebenfalls auf den Steuergerätestecker herausgeführten Ausgang 3 durch einen Codierstecker herstellbar ist. Es ist möglich, verschiedene Codierstecker vorzusehen, die eine Verbindung des Signaleingangs 6 mit jeweils einem anderen der 4 Ausgänge 1 bis 4 bewirken.

In einem zweiten Schritt 110 (Fig. 2) wird jedem Ausgang 1, 2, 3, 4 jeweils ein Wert für die oben angesprochene Sicherheitsposition zugeordnet. Ausgang 3 wird der Wert 8° zugeordnet.

Beim Start des Steuergeräts 20, also üblicherweise beim Starten des Kraftfahrzeugs, wird der eine Vielzahl von Schritten umfassende Testschritt 200 des Verfahrens ausgeführt.

Zunächst wird dabei eine Zählervariable i mit dem Wert eins initialisiert. Danach wird ein Ausgang Ai des Steuergeräts 20 mit einem Testsignal TS beaufschlagt. Mit Ai wird der i-te Ausgang des Steuergeräts 20 bezeichnet, d.h. zunächst wird der Ausgnag 1 mit dem Testsignal TS beaufschlagt.

In einem darauffolgenden Vergleichsschritt wird ein am Signaleingang 6 anliegendes Eingangssignal E erfasst und mit dem Testsignal TS verglichen. Da der momentan mit dem Testsignal TS beaufschlagte Ausgang 1 des Steuergeräts 20 nicht mit dem Signaleingang 6 verbunden ist, entspricht das Eingangssignal E nicht dem Testsignal TS, weswegen verfahrensgemäß die Zählervariable i inkrementiert wird.

Anschließend erfolgt eine Endabfrage, die erkennen soll, ob bereits alle N=4 Ausgänge 1, 2, 3, 4 des Steuergeräts 20 mit dem Testsignal TS beaufschlagt worden sind, was an dem Wert i der Zählervariable feststellbar ist. Die Endabfrage liefert ein negatives Ergebnis, da erst ein Ausgang, und zwar Ausgang 1, mit dem Testsignal beaufschlagt worden ist. Daher wird bei auf den Wert zwei inkrementierter Zählervariable i erneut auf die Ausgabe des Testsignals TS an dem Ausgang Ai zurückgesprungen, d.h. der zweite der N=4 Ausgänge 1, 2, 3, 4 wird nun mit dem Testsignal TS beaufschlagt.

Analog zum ersten Durchgang verläuft der Vergleich E == TS auch bei i=2 negativ.

Schließlich wird das Testsignal TS bei i=3 auf den Ausgang 3 ausgegeben. Der Ausgang 3 ist in Schritt 100 mit dem Signaleingang 6 verbunden worden, so dass ein den Ausgang,3 beaufschlagendes Testsignal TS auch an dem Signaleingang 6 anliegt. Dies führt zu einem positiven Vergleich des am Signaleingang 6 anliegenden Eingangssignals E mit dem Testsignal TS.

Daher wird die Zählervariable i nicht weiter inkrementiert, sondern unter Verlassen des Testschrittes 200 ein Schritt 300 durchgeführt, wobei aus dem positiven Vergleich auf die Verbindung von dem Ausgang 3 mit dem Signaleingang 6 geschlossen wird.

Unter Kenntnis der Verbindung von Ausgang 3 mit dem Signaleingang 6 wird in Schritt 300 auf den dem Ausgang 3 bereits in Schritt 110 zugeordneten Wert von 8° für die Sicherheitsposition geschlossen.

In einem folgenden Schritt 310 wird eine Funktion des Steuergeräts 20 in Abhängigkeit des soeben ermittelten Werts für die Sicherheitsposition ausgeführt, die beispielsweise von diesem Wert abhängige Initialisierungen vornimmt. Danach ist das erfindungsgemäße Verfahren beendet.

Falls während des Testschritts 200 bei keinem der mit dem Testsignal TS beaufschlagten Ausgänge 1, 2, 3, 4 ein positiver Vergleich erfolgt wäre, wäre vor der Beendigung des Verfahrens eine Fehlerbehandlungsroutine 400 durchgeführt worden.

Es ist auch denkbar, trotz positivem Vergleich bei Ausgang 3 noch die restlichen, bisher nicht mit dem Testsignal TS beaufschlagten Ausgänge, in diesem Beispiel Ausgang 4, zu testen, um eine Plausibilitätsbetrachtung zu ermöglichen. Falls bei mehr als einem getesteten Ausgang ein positiver Vergleich erfolgt wäre, so könnte ebenfalls in die Fehlerbehandlungsroutine 400 verzweigt werden.

Aus der vorstehenden Beschreibung ist ersichtlich, dass die Zahl der Vergleiche auf Übereinstimmung mit dem Testsignal TS von der Anzahl N der Ausgänge des Steuergeräts abhängt.

Damit eine Beaufschlagung eines Ausgangs mit dem Testsignal TS nicht zu einer Ansteuerung einer externen Komponente 28 führt, ist das Testsignal geeignet zu wählen.

Beispielsweise könnte die Signaldauer des Testsignals extrem kurz gewählt werden.

## Patentansprüche

1. Verfahren zum Betreiben eines elektronischen Steuergeräts (20) mit mindestens einem Signaleingang (6) und mehreren Ausgängen (1, 2, 3, 4) zur Ansteuerung externer Komponenten (28), **dadurch gekennzeichnet, dass** ein Ausgang (3) der Ausgänge (1, 2, 3, 4) mit dem Signaleingang (6) verbunden wird, und dass jedem der Ausgänge (1, 2, 3, 4) ein Wert eines Betriebsparameters des Steuergeräts (20) zugeordnet wird, so dass auf eine bestimmten Betriebsparameter geschlossen werden kann und die Funktionen des Steuergeräts (20) dann in Abhängigkeit von dem Wert eines derart ermittelten Betriebsparameters ausgeführt werden können.

2. Verfahren nach Anspruch 1, **dadurch gekennzeichnet, dass** in einem Testschritt (200) die Ausgänge (1, 2, 3, 4) mit einem Testsignal (TS) beaufschlagt werden, und dass ein am Signaleingang (6) anliegendes Eingangssignal (E) erfasst wird.

3. Verfahren nach Anspruch 2, **dadurch gekennzeichnet, dass** die Ausgänge (1, 2, 3, 4) in dem Testschritt (200) einzeln und zeitlich nacheinander mit dem Testsignal (TS) beaufschlagt werden.

4. Verfahren nach Anspruch 3, **dadurch gekennzeichnet, dass**, sobald während des Testschritts (200) am Signaleingang (6) ein mit dem Testsignal (TS) übereinstimmendes Eingangssignal (E) erfasst wird, auf die Verbindung des Signaleingangs (6) mit dem momentan mit dem Testsignal (TS) beaufschlagten Ausgang und damit auf den dem Ausgang zugeordneten Wert des Betriebsparameters des Steuergeräts (20) geschlossen wird.

5. Verfahren nach Anspruch 4, **dadurch gekennzeichnet, dass** Funktionen des Steuergeräts (20) in Abhängigkeit von dem Wert des Betriebsparameters ausgeführt werden.

6. Verfahren nach einem der vorstehenden Ansprüche, **dadurch gekennzeichnet, dass** der Betrieb der externen Komponenten (28) durch das Testsignal (TS) nicht beeinträchtigt wird.

7. Computerprogrammprodukt für ein elektronisches Steuergerät (20), **dadurch gekennzeichnet, dass** das Computerprogramm alle Schritte des erfindungsgemäßen Verfahrens nach einem der Ansprüche 1 bis 6 ausführt, wenn es auf dem Steuergerät (20) abläuft.

8. Computerprogramm nach Anspruch 7, **dadurch gekennzeichnet, dass** das Computerprogramm auf einem elektrischen Speichermedium, insbesondere auf einem Flash-Memory oder einem Read-Only-Memory abgespeichert ist.

9. Elektronisches Steuergerät (20) mit mindestens einem Signaleingang (6) und mehreren Ausgängen (1, 2, 3, 4) zur Ansteuerung externer Komponenten (28), **dadurch gekennzeichnet, dass** ein Ausgang (3) der Ausgänge (1, 2, 3, 4) mit dem Signaleingang (6) verbindbar ist, und dass jedem der Ausgänge (1, 2, 3, 4) ein Wert eines Betriebsparameters des Steuergeräts (20) zuordbar ist, so dass auf eine bestimmten Betriebsparameter geschlossen werden kann und die Funktionen des Steuergeräts (20) dann in Abhängigkeit von dem Wert eines derart ermittelten Betriebsparameters ausgeführt werden können.

10. Steuergerät (20) nach Anspruch 9, **dadurch gekennzeichnet, dass** das Steuergerät (20) zur Steuerung von Komponenten (28) eines Kraftfahrzeugs, insbesondere eines Scheinwerfersystems, vorgesehen ist.

11. Steuergerät (20) nach Anspruch 10, **dadurch gekennzeichnet, dass** die externen Komponenten (28) Schrittmotoren aufweisen.

## Revendications

1. Procédé d'exploitation d'un dispositif de commande électronique (20) comprenant au moins une entrée de signal (6) et plusieurs sorties (1, 2, 3, 4) pour la commande de composants externes (28),
**caractérisé en ce qu'**
on relie une (3) parmi des sorties (1, 2, 3, 4) à l'entrée de signal (6) et on associe à chacune des sorties (1, 2, 3, 4) une valeur d'un paramètre d'exploitation du dispositif de commande (20), de manière à pouvoir déduire un certain paramètre d'exploitation et ensuite exécuter les fonctions du dispositif de commande (20) en fonction de la valeur d'un paramètre d'exploitation ainsi calculé.

2. Procédé selon la revendication 1,
**caractérisé en ce qu'**
on change les sorties (1, 2, 3, 4) avec un signal test (TS) pendant une étape test (200) et on saisit un signal d'entrée (E) se trouvant à l'entrée de signal (6).

3. Procédé selon la revendication 2,
**caractérisé en ce que**
pendant l'étape test (200) on charge les sorties (1, 2, 3, 4) individuellement et successivement avec le signal test (TS).

4. Procédé selon la revendication 3,
**caractérisé en ce que**
dès qu'un signal d'entrée (E) coïncidant avec le signal test (TS) à l'entrée de signal (6) est suivi pendant l'étape test (200), on en déduit la liaison de l'entrée de signal (6) avec la sortie chargée à ce moment-là avec le signal test (TS) et donc la valeur du paramètre d'exploitation du dispositif de commande (20) associée à la sortie.

5. Procédé selon la revendication 4,
**caractérisé en ce que**
les fonctions du dispositif de commande (20) sont exécutées en fonction de la valeur du paramètre d'exploitation.

6. Procédé selon l'une quelconque des revendications précédentes,
**caractérisé en ce que**
l'exploitation des composants externes (28) n'est pas affectée par le signal test (TS).

7. Programme informatique pour un dispositif de commande électronique (20),
**caractérisé en ce que**
le programme informatique exécute toutes les étapes du procédé de l'invention selon l'une quelconque des revendications 1 à 6, lorsqu'il travaille sur le dispositif de contrôle (20).

8. Programme informatique selon la revendication 7,
**caractérisé en ce que**
le programme informatique est stocké sur un support d'information électrique, notamment sur une mémoire Flash ou une mémoire morte.

9. Dispositif de commande électronique (20) comprenant au minimum une entrée de signal (6) et plusieurs sorties (1, 2, 3, 4) pour la commande de composants externes (28),
**caractérisé en ce qu'**
une (3) de sorties (1, 2, 3, 4) est reliée à une entrée de signal (6), et une valeur d'un paramètre d'exploitation du dispositif de commande (20) est associée à chacune des sorties (1, 2, 3, 4) de manière à pouvoir déduire un certain paramètre d'exploitation, et la fonction du dispositif de commande (20) peut alors être exécutée en fonction de la valeur d'un paramètre d'exploitation ainsi calculé.

10. Dispositif de commande (20) selon la revendication 9,
**caractérisé en ce que**
le dispositif de commande (20) est prévu pour la commande de composants (28) d'un véhicule, notamment d'un système de phares.

11. Dispositif de commande (20) selon la revendication 10,
**caractérisé en ce que**
les composants externes (28) présentent des moteurs pas à pas.

## Claims

1. A method for operating an electronic control unit (20) that has at least one signal input (6) and a plurality of outputs (1, 2, 3, 4) for driving external components (28), wherein one output (3) of the outputs (1, 2, 3, 4) is connected to the signal input (6), and a value of an operating parameter of the control unit (20) is assigned to each of the outputs (1, 2, 3, 4), so that a specific operating parameter can be detected, and the functions of the control unit (20) can then be executed dependent on the value of an operating parameter that is detected in this way.

2. The method as recited in Claim 1, wherein in a test step (200) a test signal (TS) is applied at the outputs (1, 2, 3, 4), and an input signal (E) that is applied at the signal input (6) is captured.

3. The method as recited in Claim 2, wherein in the test step (200) the test signal (TS) is applied at the outputs (1, 2, 3, 4) individually and in sequence.

4. The method as recited in Claim 3, wherein during the test step (200) at the signal input (6) as soon as a received input signal (E) agrees with the test signal (TS), the connection is detected of the signal input (6) to the output at which the test signal (TS) has just been applied, thus detecting the value of the operating parameter of the control unit (20) that is assigned to that output.

5. The method as recited in Claim 4, wherein functions of the control unit (20) are executed dependent on the value of the operating parameter.

6. The method as recited in any of the preceding claims, wherein the operation of the external components (28) is not affected by the test signal (TS).

7. A computer program product for an electronic control unit (20), wherein the computer program executes all the steps of the method according to the present invention as recited in any of Claims 1 to 6, provided it runs on the control unit (20).

8. The computer program as recited in Claim 7, wherein the computer program is stored on an electrical storage medium, in particular on a flash memory or a read-only memory.

9. An electronic control unit (20) that has at least one signal input (6) and a plurality of outputs (1, 2, 3, 4) for driving external components (28), wherein one output (3) of the outputs (1, 2, 3, 4) can be connected to the signal input (6), and a value of an operating parameter of the control unit (20) can be assigned to each of the outputs (1, 2, 3, 4), so that a specific operating parameter can be detected, and the functions of the control unit (20) can then be executed dependent on the value of an operating parameter that is detected in this way.

10. The control unit (20) as recited in Claim 9, wherein the control unit (20) is provided for controlling components (28) of a motor vehicle, in particular a headlight system.

11. The control unit (20) as recited in Claim 10, wherein the external components (28) have stepping motors.
